# EUROPÄISCHE PATENTSCHRIFT

(11) **EP 2 303 634 B1**
(45) Veröffentlichungstag und Bekanntmachung des Hinweises auf die Patenterteilung: **24.02.2016**
(21) Anmeldenummer: 09772919.8
(22) Anmeldetag: 24.06.2009
(51) Int. Cl.: B60P 3/34

(54) **CAMPINGFAHRZEUG MIT EINER AUSFALTBAREN ZELTKONSTRUKTION**
CAMPING VEHICLE COMPRISING A TENT CONSTRUCTION THAT CAN BE FOLDED OUT
VÉHICULE DE CAMPING COMPRENANT UNE TENTE DÉPLIABLE

(30) Priorität: 01.07.2008 NL 2001737
(43) Veröffentlichungstag der Anmeldung: 06.04.2011
(73) Patentinhaber: Holtkamp, Egbert Berend, 9561 JK Ter Apel (NL)
(72) Erfinder: Holtkamp, Egbert Berend, 9561 JK Ter Apel (NL)
(74) Vertreter: Busse & Busse
(86) Internationale Anmeldenummer: PCT/IB2009/006601
(87) Internationale Veröffentlichungsnummer: WO 2010/001259

(56) Entgegenhaltungen:
- EP-A- 1 232 908
- WO-A-03/006765
- DE-A1- 4 008 851
- NL-C2- 1 004 052
- US-A- 3 393 479
- US-B1- 6 179 367

## Beschreibung

Die Erfindung bezieht sich auf ein Campingfahrzeug nach dem Oberbegriff des Anspruchs 1.

Ausfaltbare Zeltkonstruktionen sind seit langem bekannt (US 3,393,479), wobei diese auch an Fahrzeuge mit kastenartigem Aufbau (DE 40 08 851 A1) gekoppelt sein können. Gemäß NL 1004052 C2 ist in den Campinganhänger ein Zelt integriert, und US 6,179,367 B1 zeigt eine Zeltkonstruktion zum heckseitigen Anbau an ein Zugfahrzeug, wobei das Gestänge hinter dem Fahrzeug auf dem Boden abzustellen ist. Auch das als Baugruppe transportable Zelt gemäß WO 03/006765 A1 weist einen Bodenteil mit Gestänge auf, wobei dieses Gestänge mit einem Dachteil so zusammenwirkt, dass durch Aufblasen ein frei stehendes Zelt mit Innenboden gebildet ist.

Ein gattungsgemäßes Campingfahrzeug weist eine in das Campingfahrzeug integrierte ausfaltbare Zeltkonstruktion auf (EP 1 232 908 A1).

Ein in der Praxis viel benutztes, ähnliches Campingfahrzeug ist zum Beispiel ein so genannter "Faltcaravan", das heißt, ein Anhänger, der eine ausfaltbare Zeltkonstruktion umfasst. Ein derartiger Faltcaravan wird auch "Zeltanhänger", oder kurz "Faltwagen" genannt (EP 1 232 908 A1). In zusammengefaltetem Zustand der Zeltkonstruktion fungiert der Laderaum in der Ladefläche des Faltcaravans als Abstellraum für Teile der zusammengefalteten Zeltkonstruktion. In auseinandergefaltetem Zustand der Zeltkonstruktion kann der Laderaum ein Teil des inneren Aufenthaltsraums der Zeltkonstruktion sein.

Statt eines Anhängers kann ein derartiges, mit einer ausfaltbaren Zeltkonstruktion versehenes Campingfahrzeug auch ein Automobil sein. In diesem Fall wird das Campingfahrzeug in der Regel "Wohnmobil", oder auch "Camper" genannt. Bei einem derartigen Wohnmobil mit integrierter Zeltkonstruktion kann die Zeltkonstruktion im Lagerzustand zum Beispiel in einem Behälter an der Rückseite, der Seite, oder auf der Oberseite des Wohnmobils untergebracht sein.

Derartige Campingfahrzeuge mit einer integrierten Zeltkonstruktion sind für Freizeitverwendung vorgesehen. Zum Beispiel während der Urlaubszeit wird die Zeltkonstruktion häufig ausgefaltet und aufgestellt, bzw. zusammengefaltet und eingeräumt. Benutzer, die ein derart integriertes, Transport- und Wohnmöglichkeiten in sich vereinendes Beförderungsmittel wählen, besuchen ja oft jeden Tag einen anderen Ferienort.

Auch an einem bestimmten Aufenthaltsort des Campingfahrzeugs wird die Zeltkonstruktion ziemlich oft aus- und/oder zusammengefaltet. Benutzer möchten zum Beispiel eine Zeltkonstruktion, die durch Niederschlag nass geworden ist, nicht zusammenfalten und einräumen. Um dies vorzubeugen, wird in Antizipation auf einen erwarteten Schauer die Zeltkonstruktion oft nur während des Schauers kurz eingeräumt, um dann die Zeltkonstruktion nach dem Schauer wieder auseinanderzufalten und aufzustellen. Wenn wegen einer notwendigen, nicht verschiebbaren Abreise nicht vorgebeugt werden konnte, dass die Zeltkonstruktion doch nass eingeräumt werden musste, stellen Benutzer die Zeltkonstruktion an einem späteren, geeigneten Zeitpunkt oft kurz wieder auf, lediglich, damit sie in die Gelegenheit gestellt werden, die Zeltkonstruktion wieder trocknen zu lassen. Nach dem Trocknen wird die Zeltkonstruktion dann wieder eingeräumt.

Wegen des häufigen Aus- und Zusammenfaltens der Zeltkonstruktion hegen Benutzer oft den Wunsch, dass zumindest das Auseinanderfalten, aber auch das Zusammenfalten, mit optimalem Bedienungskomfort stattfinden kann.

Bei den bekannten Campingfahrzeugen mit einer integrierten Zeltkonstruktion lässt dieser Bedienungskomfort noch viel zu wünschen übrig.

Beim Auseinanderfalten sowie beim Zusammenfalten müssen die Benutzer wissen oder herausfinden, wo und in welcher Weise der Rahmenaufbau, in Form von zum Beispiel Stangen, Zeltstöcken, aber auch Zeltleinen, -heringen, -pflöcken, oder dergleichen, aufgebaut beziehungsweise wieder in einen Aufbewahrungszustand gebracht werden sollte. Dabei muss sich ein Benutzer oft, auf Händen und Füßen herumkriechend und suchend, unter eine schlaff herabhängende Zeltplane begeben, während er dabei zugleich die Zeltplane hoch halten sollte. Für all dies sind mehrfache Handlungen, oft von mehreren Personen, erforderlich, wobei an verschiedenen Stellen an der Zeltplane gezogen und gezerrt werden muss. Wenn die Zeltkonstruktion zum Beispiel mit einer Bodenplane versehen ist, wird diese Plane beim Auseinanderfalten oft infolge der schwierigen Aufgaben der Benutzer nicht richtig hingelegt, wodurch die Bodenplane schief liegt und unerwünschte Falten entstehen. Die Zeltkonstruktion, insbesondere die Bodenplane, ist ziemlich oft nass und/oder verschmutzt, wodurch sich Benutzer oft schmutzige Körperteile und verschmutzte Kleidung einhandeln. Auch der Rahmenaufbau wird ziemlich oft falsch aufgestellt. Benutzer können sich an Teilen des Rahmenaufbaus verletzen.

Die notwendigen Anstrengungen und das erzielte Endergebnis des Aufstellens sowie des Einräumens der Zeltkonstruktion sind bei den bekannten Campingfahrzeugen mit einer integrierten Zeltkonstruktion stark von der Geschicklichkeit, der Erfahrung, der Anzahl und den physischen Möglichkeiten der betreffenden Benutzer abhängig. Für alleinstehende, kleinere, ältere, schwächere oder körperbehinderte Zelter kommt die Wahl eines derartigen Campingfahrzeugs oft nicht in Frage.

Der Erfindung liegt die Aufgabe zugrunde, zur Vermeidung der genannten Nachteile eine gattungsgemäße Zeltkonstruktion eines Campingfahrzeugs der im Anfang genannten Art zu schaffen, die zumindest einfacher aufgestellt werden kann.

Erfindungsgemäß sieht die Erfindung ein Campingfahrzeug mit den kennzeichnenden Merkmalen des Anspruchs 1 vor.

Das Aufblasen kann zum Beispiel mithilfe von Aufblasluft, die von einem Kompressor herrührt, und/oder mithilfe einer Luftpumpe stattfinden. Durch dieses Aufblasen geht die Zeltkonstruktion in einfacher Weise von dem Aufbewahrungszustand in den vorübergehend auftretenden Aufblaszustand über. In diesem Aufblaszustand nimmt die Zeltkonstruktion bereits zum Teil oder sogar gänzlich automatisch den Aufrichtzustand an. Der Benutzer braucht deshalb nicht zu wissen oder herauszufinden, wie die Zeltkonstruktion ausgefaltet werden sollte. So kann die Zeltkonstruktion automatisch, so zu sagen "auf Knopfdruck", aufgestellt werden.

Der Rahmenaufbau kann zum Beispiel Stangen, Zeltstöcke, aber auch Zeltleinen, -heringe, -pflöcke, oder dergleichen umfassen.

Der Rahmenaufbau wird während des Aufblaszustandes zum Beispiel voll-, oder teilautomatisch, zumindest zum Teil in seinen Betriebszustand gebracht werden. Zum Beispiel kann der Rahmenaufbau, gänzlich oder teilweise vorgefertigt, mit der ausfaltbaren Zeltkonstruktion verbunden sein und sich während des Aufblasens automatisch gleichzeitig mit dem Auseinanderfalten der Zeltkonstruktion bis in eine Lage ausfalten, in der der Rahmenaufbau zum Aufrechterhalten des Aufrichtzustandes die ausgefaltete Zeltkonstruktion festhält.

Das Aufheben des Aufblaszustandes kann zum Beispiel ab dem Moment stattfinden, in dem der Rahmenaufbau während des Aufblaszustandes zumindest teilweise dahingehend (vollautomatisch, oder aber teilautomatisch) in seine Betriebslage gebracht wurde, dass die Zeltkonstruktion ab diesem Moment auf einfache Weise in seinen Aufstellzustand gebracht werden kann. Sofern dies nicht automatisch geschehen ist, kann der Benutzer zum Beispiel während des Aufblaszustandes eine Anzahl von Stangen, Zeltstöcken oder Zeltleinen angeordnet oder fixiert haben, wodurch sich die Zeltkonstruktion beim Aufheben des Aufblaszustandes nicht automatisch wieder zusammenfaltet.

Ein erheblicher Vorteil eines erfindungsgemäßen Campingfahrzeugs besteht weiter darin, dass der beschriebene Grundgedanke auch umgekehrt angewendet werden kann, das heißt beim Einräumen einer aufgestellten Zeltkonstruktion. In diesem Fall können zum Beispiel Tür-, Fenster-, und Lüftungsöffnungen verschlossen werden, Absaugmittel an den Aufblasanschluss angeschlossen werden, Rahmenelemente entfernt und/oder gelöst werden und die Absaugmittel zum Aussaugen des inneren Aufenthaltsraums und also zum automatischen Zusammenfallen der Zeltkonstruktion aktiviert werden. Ein zusätzlicher Vorteil besteht darin, dass die Zeltkonstruktion im Vergleich zum manuellen Wegräumen der Zeltkonstruktion vollständig ausgesaugt werden kann, so dass also in einer einfachen Weise erreicht wird, dass die Zeltkonstruktion in dem Lagerzustand äußerst kompakt ist, ähnlich wie ein vakuumverpacktes Produkt.

Im Handel sind Geräte erhältlich, die wahlweise einstellbar sind, um als Aufblasvorrichtung oder aber als Absaugvorrichtung zu arbeiten, so dass die Zeltkonstruktion mit einem einzigen Gerät sowohl automatisch aufgestellt als auch automatisch weggeräumt werden kann. Dabei kann der Aufblasanschluss wahlweise auch als Absauganschluss fungieren. Die Aufblasvorrichtung kann zum Beispiel dazu ausgelegt sein, durch eine Umkehrung der Luftströmung zugleich als Absaugvorrichtung zu fungieren. Gegebenenfalls kann nebst einer Aufblasvorrichtung auch eine separate und ähnliche Absaugvorrichtung vorgesehen sein. In letztem Fall können zum Beispiel Absaugmittel an den Absauganschluss und Aufblasmittel an den Aufblasanschluss angeschlossen sein oder in einem einzigen Gerät integrierte Absaugmittel/Aufblasmittel an beide Anschlüsse angeschlossen sein.

Spezifische Ausbildungen der Erfindung sind in den abhängigen Ansprüchen festgelegt.

Nachfolgend wird die Erfindung unter Bezugnahme auf die Prinzipdarstellungen in der beigefügten Zeichnung näher erläutert.
- Figur 1: zeigt in räumlicher Darstellungsweise ein Beispiel einer Ausbildung eines erfindungsgemäßen Faltcaravans.
- Figur 2: zeigt in räumlicher Darstellungsweise ein Beispiel einer Ausbildung eines mit einem erfindungsgemäßen Vorzelt versehenen Faltcaravans.
- Figur 3: zeigt in räumlicher Darstellungsweise ein Beispiel einer Ausbildung eines erfindungsgemäßen Wohnmobils.

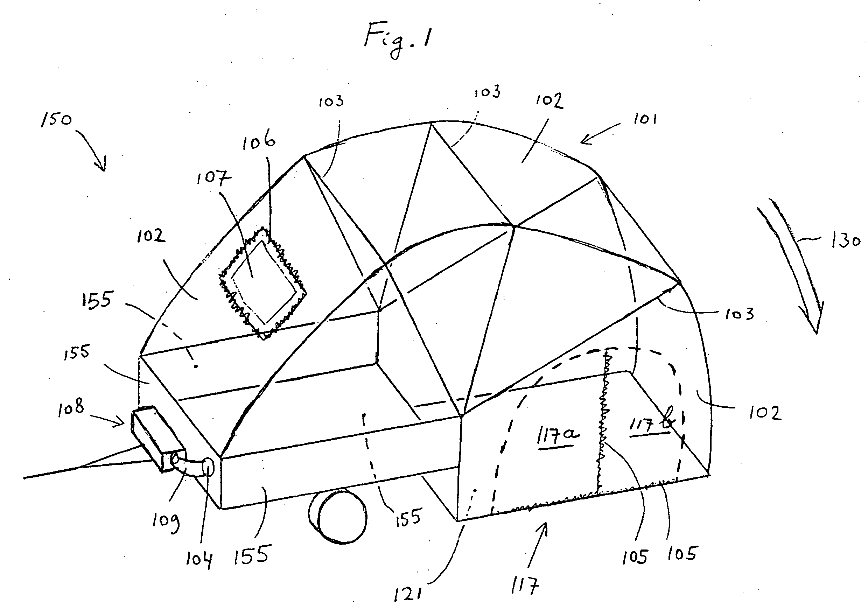

Es wird jetzt zuerst auf die Figur 1 verwiesen, in der ein Beispiel einer Ausbildung eines erfindungsgemäßen Faltcaravans 150 gezeigt wird. Der Faltcaravan 150 umfasst eine von Boden- und Seitenwänden 155 gebildete Ladefläche. Der Faltcaravan 150 umfasst weiter eine ausfaltbare Zeltkonstruktion 101, die eine Mehrzahl von an die Ladeflächenwände 155 anschließenden Zeltwänden 102 umfasst. In Figur 1 ist die Zeltkonstruktion 101 im Aufstellzustand gezeigt, in dem die Zeltkonstruktion auseinandergefaltet ist. In dem (nicht gezeigten) Lagerzustand der Zeltkonstruktion fungiert der Laderaum in der Ladefläche des Faltcaravans als Abstellraum für Teile der zusammengefalteten Zeltkonstruktion.

Die Ladeflächenwände 155 und die Zeltwände 102 schließen in solcher Weise aneinander an, dass sie zusammen ein Teil einer Begrenzungswandkonstruktion sind, die im Aufstellzustand einen inneren Aufenthaltsraum der Campingfahrzeugs 150 definiert, wobei sowohl die Ladeflächenwände 155 als auch die Zeltwände 102 den Aufenthaltsraum unmittelbar begrenzen. In dem gezeigten, ausgefalteten Zustand der Zeltkonstruktion ist der Laderaum der Ladefläche ein Teil des inneren Aufenthaltsraums des Faltcaravans.

In Fig. 1 ist mit Bezugszeichen 103 eine Anzahl von steifen, U-förmigen Rahmenelementen des Rahmenaufbaus der Zeltkonstruktion 101 angedeutet. Die Zeltwände 102 können zum Beispiel hauptsächlich Tuchmaterial, das mit den Rahmenelementen 103 verbunden ist, aufweisen. In dem Beispiel sind die Rahmenelemente 103 in einer der bei Faltcaravans üblichen Weise schwenkbar an der Ladefläche befestigt, so dass die Zeltkonstruktion 101 in mit Pfeil 130 angedeuteter Richtung ausfaltbar ist, um den gezeigte Aufstellzustand zu erreichen. Aus dem Aufstellzustand heraus ist die Zeltkonstruktion 101 in entgegengesetzter Richtung des Pfeils 130 zusammenfaltbar, um den Lagerzustand zu erreichen. In dem Lagerzustand fungiert die Ladefläche des Faltcaravans als Abstellraum für die Rahmenelemente 102 und für die Zeltwände 102.

Der mit dem Bezugszeichen 121 angedeutete Teil der Zeltwände 102 kann zum Beispiel aus Segeltuch hergestellt sein, das einerseits für eine Anwendung als Bodenplane der Zeltkonstruktion in dem Aufstellzustand und andererseits für eine Anwendung als Abdeckplane des Anhängers in dem Lagerzustand geeignet ist. Der Teil 121 kann jedoch zum Beispiel auch aus einem steifen Plattenmaterial hergestellt sein, um einen harten Boden bzw. harten Deckel zu bilden.

In dem gezeigten Beispiel sind die Zeltwände 102 mit einer Fensteröffnung 107 und einer Türöffnung 117 versehen. Diese Öffnungen in der betreffenden Wand 102 sind zum Beispiel mit Tür- oder Fensterverkleidungen, Reißverschlüssen, Klettband oder dergleichen verschließbar. Auch kann die Begrenzungswandkonstruktion mit einer oder mehreren verschließbaren Lüftungsöffnungen versehen sein. Erfindungsgemäß ist die Begrenzungswandkonstruktion mit Schließmitteln versehen, um alle Fenster-, Tür- und Lüftungsöffnungen der Begrenzungswandkonstruktion zu verschließen. In dem Beispiel ist die Türöffnung 117 mit Türlappen 117a, 117b und einem Reißverschluss und die Türöffnung 107 mit einer mit einem Reißverschluss versehenen Fensterabdeckung 106 verschließbar.

Weiter ist die Begrenzungswandkonstruktion mit einem Aufblasanschluss 104 für Aufblasmittel 108 versehen. Die Aufblasmittel können zum Beispiel einen Luftkompressor oder eine Luftpumpe aufweisen. Im Beispiel ist eine Leitung 109 für derartige Aufblasmittel 108 gezeigt, so dass über diese Leitung die Aufblasluft geliefert werden kann. Der Anschluss 104 befindet sich in einer Seitenwand 155 der Ladefläche, kann sich aber auch in einer anderen Wand der Begrenzungswandkonstruktion befinden, zum Beispiel in der Bodenwand der Ladefläche.

Es wird bemerkt, dass im Rahmen der Erfindung der Aufblasanschluss auch mehr oder weniger in das Aufblasmittel integriert sein kann. Zum Beispiel können die Aufblasmittel wahlweise (semi)-permanent mit der Begrenzungswandkonstruktion verbunden sein oder zumindest teilweise in solcher Weise ein Bestandteil der Begrenzungswandkonstruktion sein, dass der Aufblasanschluss von dem Aufblasausgang der Aufblasmittel gebildet wird.

Die gezeigte Begrenzungswandkonstruktion 102, 155 ist dabei so ausgelegt, dass diese - mit den Schließmitteln 105, 106 im verschlossenen Zustand - mittels der Aufblasmittel 108 ausgehend von dem Lagerzustand in einen während des Aufstellens der Zeltkonstruktion 101 vorübergehend auftretenden Aufblaszustand aufblasbar sind. In dem Aufblaszustand ist die Zeltkonstruktion 101 zumindest teilweise dadurch ausgefaltet, dass von den Aufblasmitteln 108 ein Überdruck in dem Aufenthaltsraum bewirkt wird. Diese Form der Aufblasbarkeit impliziert die Anwesenheit von vorgenannten Schließmitteln und einen völlig von der Begrenzungswandkonstruktion 102, 155 eingehüllten Aufenthaltsraum. Wenn zum Beispiel in der Ausführung gemäß Fig. 1 die Fensterabdeckung 106 nicht vorhanden wäre oder die Bodenplane 121 fehlen würde, so würde die Zeltkonstruktion nicht in vorgesehenem Sinn aufblasbar sein, und zwar wegen des Leckens der Aufblasluft. Diese Form der Aufblasbarkeit bedeutet jedoch nicht, dass die Wände der Begrenzungswandkonstruktion aus einem völlig luftundurchlässigen Material hergestellt sein müssen. Ein geringes, durch das Material oder durch (zum Beispiel aneinander genähte) Anschlussränder bedingtes Lecken steht der Aufblasbarkeit der Zeltkonstruktion nicht im Wege.

Der Rahmenaufbau ist dazu so ausgelegt, dass dieser - nachdem dieser während des Aufblasvorganges zumindest teilweise in seinen Betriebszustand verlagert wurde - nach einem Beenden des Aufblasvorganges den aufgerichteten Zustand ohne den Überdruck im Aufenthaltsraum aufrecht erhalten kann.

Fig. 1 zeigt zugleich ein Beispiel einer Situation, in der das Campingfahrzeug dazu ausgelegt ist, den Rahmenaufbau während des Aufblasens mittels der Aufblasmittel zumindest teilweise automatisch in seinen Betriebszustand zu bringen. Die Rahmenelemente 103 verschwenken dabei abhängig von dem Aufblasen, und im übrigen auch von dem Aussaugen, jeweils automatisch. Dies bietet dem Benutzer zusätzlichen Bedienungskomfort. Als weitere Möglichkeit könnte der Rahmenaufbau noch mit zusätzlichen Rahmenelementen oder Einrichtungen versehen sein, um die genannten Rahmenelemente 103 manuell zusätzlich in dem Aufrichtzustand zu positionieren oder zu fixieren, zum Beispiel dadurch, dass Rahmenelemente zusammengeschoben, um ein Gelenk gedreht oder festgeschnappt werden. Es wird bemerkt, dass eine Anwendung von zusammenschiebbaren Rahmenelementen den Vorteil bietet, dass diese infolge des Aufblasens oder Aussaugens automatisch aus- oder einschieben können. Als zusätzliche Möglichkeit kann dabei beim Herausschieben auch eine Arretierung eines ausgezogenen Zustandes automatisch stattfinden. Zugunsten des Letztgenannten können zum Beispiel an den zusammenschiebbaren Rahmenelementen angeordnete Arretierungselemente verwendet werden, die sich zum Beispiel unter der Wirkung einer Federkraft automatisch in Betrieb setzen, sobald ein vorgegebener Zustand erreicht ist. Zusammenschiebbare Rahmenelemente, die dazu vorgesehen sind, durch das Aufblasen und/oder Aussaugen automatisch aktiviert zu werden, sind vorzugsweise dazu ausgelegt, mit so wenig wie möglich Widerstand aus- und/oder einzuschieben. Wenn auch die betreffenden automatischen Arretierungselemente angewendet werden, arbeiten diese vorzugsweise mit einem möglichst geringen Widerstand.

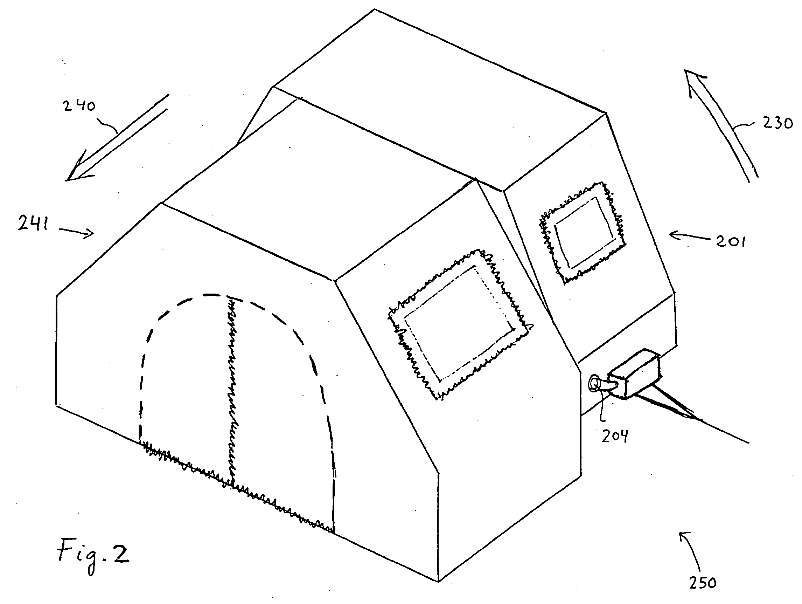

Jetzt wird auf die Figur 2 verwiesen, die einen erfindungsgemäßen Faltcaravan 250 zeigt. Der Faltcaravan 250 ist mit einer Zeltkonstruktion 201 versehen. Der Faltcaravan 250 entspricht dem in Fig. 1 gezeigten Faltcaravan 150, und zwar in dem Sinn, dass die Zeltkonstruktion 201 eine ausfaltbare Hauptzeltkonstruktion umfasst, die der Zeltkonstruktion 101 des in Fig. 1 gezeigten Faltcaravans 150 entspricht. In der gezeigten Situation befindet sich die Hauptzeltkonstruktion im aufgestellten Zustand, welcher dadurch erreicht wurde, dass die Hauptzeltkonstruktion in Richtung des gezeigten Pfeils 230 ausgefaltet ist. Der Aufblasanschluss ist mit dem Bezugszeichen 204 angedeutet.

Die Zeltkonstruktion 201 umfasst zugleich ein mit der Hauptzeltkonstruktion verbundenes, oder ein verbindbares, ausfaltbares Ausbauzelt 241 für die Hauptzeltkonstruktion, in diesem Fall ein Vorzelt. Auch dieses Vorzelt kann mittels eines Aufblasvorgangs aufgerichtet werden und gegebenenfalls mittels eines Aussaugvorgangs zusammengelegt werden. In Fig. 2 wird mit Bezugszeichen 240 ein Pfeil angedeutet, der die Richtung angibt, in die sich das Vorzelt 241 aus seinem Lagerzustand heraus während des Aufblasens auseinanderfaltet. Das Zusammenfalten findet in entgegengesetzter Richtung statt. Zusätzlicher Bedienungskomfort wird geboten, wenn der Aufblasanschluss der Zeltkonstruktion 201 zugleich als Aufblasanschluss für das Vorzelt 241 fungiert. Beispielsweise kann der Aufblasanschluss der Zeltkonstruktion 201 über einen Luftkanal mit dem inneren Aufenthaltsraum des Vorzelts 241 verbunden sein, wobei die Luftströmung durch den Luftkanal mithilfe eines gesteuerten oder betätigbaren Absperrventils geregelt sein kann. Also kann zum Beispiel mittels einer Betätigung oder Steuerung erwirkt werden, dass ausgehend von einem Lagerzustand von sowohl der Hauptzeltkonstruktion als auch des Vorzelts 241 zuerst die Hauptzeltkonstruktion und danach das Vorzelt 241 aufgeblasen werden.

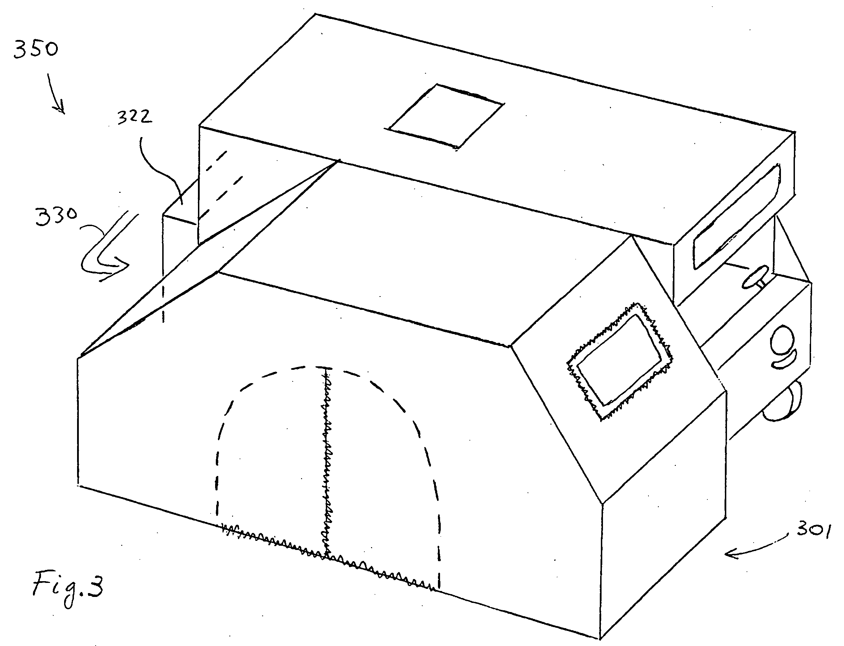

Jetzt wird auf die Figur 3 verwiesen, die ein erfindungsgemäßes Campingfahrzeug in Form eines Automobils zeigt. Im gezeigten Beispiel ist das Automobil ein Wohnmobil 350 (auch "Camper" genannt), welches mit einer ausfaltbaren Zeltkonstruktion 301 versehen ist. In dem Lagerzustand kann die Zeltkonstruktion 301 zum Beispiel in einem an dem Automobil befestigten Aufbewahrungsüberzug an der Rückseite, der Seite, oder auf dem Automobil untergebracht sein. In dem Beispiel wird ein sich an der Rückseite des Automobils befindlicher Aufbewahrungsüberzug 322 gezeigt, wobei die Zeltkonstruktion 301 in der mit Pfeil 330 angedeuteten Richtung ausfaltbar ist.

Es wird bemerkt, dass das in dem Beispiel der Figur 3 gezeigte Automobil 350 auch bereits ohne das Vorhandensein der Zeltkonstruktion 301 ein Campingfahrzeug wäre. Stattdessen könnte ein erfindungsgemäßes Automobil jedoch auch eines Typs sein, das ohne das Vorhandensein einer Zeltkonstruktion kein Wohnmobil wäre, jedoch zum Beispiel ein normales Personenauto (auch "Luxusauto" genannt).

Bei einem erfindungsgemäßen Campingfahrzeug können die Aufblasmittel in solcher Weise auf die Zeltkonstruktion abgestimmt oder eingestellt sein, dass als Reaktion auf eine von einem Benutzer ausgeführte Betätigungshandlung, um die Zeltkonstruktion aus dem Lagerzustand heraus aufzurichten, die Aufblasmittel eine dosierte Menge Luft abgeben, die bei üblichen Umgebungsdrücken auf etwa das Volumen des inneren Aufenthaltsraums im Aufrichtzustand begrenzt wird. Also wird zusätzlicher Bedienungskomfort dadurch geschaffen, dass eine geeignete Menge Aufblasluft automatisch angewendet wird, ohne zum Beispiel das Risiko einzugehen, dass die Begrenzungswandkonstruktion zu hart aufgeblasen wird und diese beschädigt werden könnte. Stattdessen oder zusätzlich könnte auch ein Überdruckventil eingesetzt werden.

Die Art und Weise, wie Zeltkonstruktionen von Campingfahrzeugen erfindungsgemäß automatisch aufgestellt bzw. zusammengelegt werden können, ist für jedes Modell unterschiedlich. Der Umfang der Automatisierung kann variieren von einem etwas niedrigeren Niveau, bei dem Benutzer während des Aufblasens bzw. Aussaugens ab und zu einige einfache und leichte, assistierende Handlungen verrichten, wie zum Beispiel das Unterstützen von Bewegungen des Rahmenaufbaus oder der Zeltwände, bis zu einem hohen Niveau, oder sogar vollautomatischem Niveau, bei dem derartige assistierende Handlungen nicht oder kaum notwendig sind. Im Allgemeinen gilt dabei, dass je nachdem, wie der Umfang der Automatisierung zunimmt, die Entwicklungsanforderungen stringenter sind. Bei einem niedrigeren Automatisierungsniveau kann zum Beispiel für die zumindest eine Zeltwand ein Zeltplanenmaterial aus Polyester oder Nylon, das mit Polyurethan, Acryl, oder PVC laminiert wurde, oder eine Baumwolle oder ein Polyester/Baumwolle-Gewebe von etwa 300 Gramm pro Quadratmeter benutzt werden. Als Bodenplanenmaterial können dann die bei Zelten üblichen Materialen dienen. Bei einem hohen Automatisierungsniveau ist luftundurchlässiges Zeltplanenmaterial eines leichteren Gewichtes erwünscht, zum Beispiel ein Polyestergewebe von etwa 180 bis 230 Gramm pro Quadratmeter, laminiert mit Acryl oder Polyurethan oder einer Kombination der beiden. Auch das Bodenplanenmaterial ist dann vorzugsweise leicht im Gewicht und biegsam, insbesondere wenn die Zeltkonstruktion relativ groß ist. Bei einem von dem Patentanmelder getesteten Faltcaravan hat sich zum Beispiel als Zelttuch und als Bodenplane ein Tuch mit einem Gewicht von 180 Gramm pro Quadratmeter, das aus einem Polyester "Ripstop"- Gewebe mit einer Polyurethan-Beschichtung hergestellt ist, als geeignet erwiesen. Vor allem bei einem hohen Automatisierungsniveau ist es weiterhin erwünscht, dass das Campingfahrzeug so ausgelegt ist, dass die zumindest eine Aufblasöffnung während des Aussaugens nicht durch ein angesaugtes Zeltplanenmaterial verstopft wird.

Bei einem erfindungsgemäßen Campingfahrzeug können unterschiedliche Arten von Aufblasmitteln und/oder Aussaugmitteln angewendet werden. Bei einem von dem Patentanmelder getesteten erfindungsgemäßen Faltcaravan hat sich gezeigt, dass zum Beispiel folgendes, im Handel erhältliches Produkt für das Aufblasen benutzt werden kann: Typ "Air Blower" von Zhongshan Wilson Plastic Industrial C. Ltd., Modell FJ-25, 250 Watt. Zum Aussaugen des erwähnten Faltcaravans hat sich gezeigt, dass die meisten herkömmlichen Haushaltsstaubsauger zwischen 800 Watt und 1300 Watt geeignet sind. Bei diesem Faltcaravan hat sich herausgestellt, dass ein "Black & Decker GW 3000" von 3000 Watt sowohl zum Aufblasen als auch zum Aussaugen geeignet ist. Im Prinzip sind jedoch auch etwas größere, mit der Hand oder dem Fuß betätigbare Luftpumpen geeignet.

Es wird bemerkt, dass die oben genannten Beispiele der Ausbildungen die Erfindung nicht einschränken, und dass innerhalb des Schutzumfangs der beiliegenden Unteransprüche diverse Alternative möglich sind.

So sind viele unterschiedliche Formen von Zeltkonstruktionen möglich, zum Beispiel mit verschiedenen Ausstülpungen. Auch können diverse Arten von Ausbauzelten angewendet werden, zum Beispiel Vorzelte, Dachzelte und dergleichen. So sind zum Beispiel bei einem erfindungsgemäßen Faltcaravan unterschiedliche Formen von Zeltkonstruktionen möglich, die sich während des Aufblasens so aufrichten, dass diese die detaillierten äußeren Formen eines Zugfahrzeugs des Faltcaravans annehmen. Wird die erfindungsgemäße Lösung bei dem aus der NL1017395 bekannten Faltcaravan angewendet, bietet dies zum Beispiel einen besonderen Bedienungskomfort.

Weiter kann der innere Aufenthaltsraum in miteinander verbundene Teilräume unterteilt sein. Auch können diverse Arten von elektrisch angetriebenen oder nicht elektrisch angetriebenen Aufblasmitteln angewendet werden.

Zusätzlicher Bedienungskomfort wird auch erhalten, wenn die Aufblasmittel und/oder die Aussaugmittel mithilfe einer (drahtlosen) Fernbedienung betätigbar sind. Damit kann ein Zelter die Zeltkonstruktion seines Faltcaravans zum Beispiel von dem Zugfahrzeug aus aufrichten oder einräumen, was zum Beispiel während eines Schauers willkommen ist.

Weiter sind diverse Anschlussmechanismen für den Anschluss zwischen der zumindest einen Fahrzeugwand und der zumindest einen Zeltwand möglich. Nur als eines der vielen möglichen Typen von derartigen Anschlussmechanismen sind hier die aus der EP 1 243 723 B1 bekannten Abdichtungen vorgesehen, die zumindest einen luftdichten, aufblasbaren, rohrförmigen Körper aus einem geschmeidigen Material aufweisen. Wenn ein derartiger Typ einer Abdichtung benutzt wird, gibt es eine Optionsmöglichkeit, um auch den aufblasbaren Körper automatisch aufzublasen bzw. auszusaugen, indem dieser Körper an die für das Aufblasen bzw. das Aussaugen der Begrenzungswandkonstruktion dienenden Aufblasmittel beziehungsweise Aussaugmittel angeschlossen wird.

Wenn die zumindest eine Zeltwand steife Wandteile aufweist, so sind diese Teile vorzugsweise aus einem leichten Material angefertigt. Für diesen Zweck kann zum Beispiel eine Kohlefaserverbund-, Sandwich- und/oder Wabenbauweise in diesen steifen Wandteilen angewendet werden.

Andere Varianten oder Abänderungen sind jedoch auch möglich.

## Patentansprüche

1. Campingfahrzeug, wie ein Automobil (350) oder ein Anhänger (150; 250) für Freizeitverwendung, umfassend:
- zumindest eine Fahrzeugwand (155);
- eine, zumindest eine Zeltwand (102) aufweisende ausfaltbare Zeltkonstruktion (101; 201; 301), die beim Aufrichten der Zeltkonstruktion von einer zumindest von der wenigstens einen Fahrzeugwand bereitgestellten Lagerzustand aus, in dem die Zeltkonstruktion zusammengefaltet ist, in einen Aufrichtzustand gebracht werden kann, in dem die Zeltkonstruktion auseinandergefaltet ist; und
- einen Rahmenaufbau (103) zu dem Aufrechthalten des Aufrichtzustandes der ausgefalteten Zeltkonstruktion;
wobei die zumindest eine Fahrzeugwand (155) und die wenigstens eine Zeltwand (102) in solcher Weise aneinander anschließen oder aneinander anschließbar sind, dass diese in einem aneinander anschließenden Zustand zusammen ein Teil einer Begrenzungswan-dkonstruktion sind, die im Aufstellzustand zumindest einen inneren Aufenthaltsraum der Campingfahrzeugs (150; 250; 350) definiert, wobei sowohl zumindest ein Teil der wenigstens einen Fahrzeugwand als auch zumindest ein Teil der wenigstens einen Zeltwand jeweils den zumindest einen Aufenthaltsraum unmittelbar begrenzen,
**dadurch gekennzeichnet, dass**
- die Begrenzungswandkonstruktion mit zumindest einem Aufblasanschluss (104; 204) für Aufblasmittel (108, 109) versehen ist und Schließmittel (105, 106) umfasst, mit denen sämtliche einen Bestandteil der Begrenzungskonstruktion bildende Öffnungen (107, 117), wie Fenster- und/oder Tür- und/oder Lüftungsöffnungen, zu dem zumindest einen Aufenthaltsraum verschließbar sind;
- die Begrenzungswandkonstruktion (102, 155) dazu ausgelegt ist, bei im verschlossenen Zustand befindlichen Schließmitteln ausgehend vom Lagerzustand mittels der Aufblasmittel in einen während des Aufrichtens der Zeltkonstruktion vorübergehend auftretenden Aufblaszustand aufblasbar zu sein und in diesem Zustand die Zeltkonstruktion zumindest dadurch teilweise ausgefaltet ist, dass die Aufblasmittel einen Überdruck in dem Aufenthaltsraum bewirken;
- dabei das Campingfahrzeug (150; 250; 350) dazu ausgelegt ist, den Rahmenaufbau (103) während des Aufblasvorgangs mittels der Aufblasmittel (108, 109) zumindest teilweise automatisch in seinen Betriebszustand zu bringen; und
- der während des Aufblasvorgangs zumindest teilweise in seinen Betriebszustand gebrachte Rahmenaufbau (103) dazu ausgelegt ist, einen nach einem Beenden des Aufblaszustandes erreichten Aufrichtzustand ohne den Überdruck im Aufenthaltsraum aufrecht zu erhalten.

2. Campingfahrzeug nach Anspruch 1, bei dem die Zeltkonstruktion (201) eine ausfaltbare Hauptzeltkonstruktion sowie zumindest ein mit der Hauptzeltkonstruktion verbundenes oder verbindbares, ausfaltbares Ausbauzelt (241) für die Hauptzeltkonstruktion aufweist.

3. Campingfahrzeug nach Anspruch 1 oder 2, weiter umfassend an den Aufblasanschluss (104; 204) anschließbare Aufblasmittel und/oder Aussaugmittel (108, 109).

4. Campingfahrzeug nach Anspruch 3, bei dem die Aufblasmittel (108, 109) in solcher Weiser auf die Zeltkonstruktion abgestimmt oder dazu einstellbar sind, dass in Reaktion auf eine von einem Benutzer ausgeführte Betätigungshandlung, um die Zeltkonstruktion von dem Lagerzustand aus aufzurichten, die Aufblasmittel eine dosierte Menge Luft abgeben, die bei üblichen Umgebungsdrücken auf etwa das Volumen des inneren Aufenthaltsraums in dem Aufrichtzustand beschränkt ist.

## Claims

1. Camping vehicle such as an automobile (350) or a towed vehicle (150; 250) for use during leisure time, comprising:
- at least one vehicle wall (155);
- a fold-out tent construction (101; 201; 301) which comprises at least one tent wall (102) and, when the tent construction is being set up, can be moved from a stored state which is provided at least by the at least one vehicle wall and in which the tent construction is folded up, into a set-up state in which the tent construction is folded out; and
- a frame structure (103) for keeping the folded-out tent construction in the set-up state;
the at least one vehicle wall (155) and the at least one tent wall (102) adjoining one another or being adjoinable to one another in such a way that, when in the adjoined state, they form part of a partition wall construction which, when erected, defines at least one inner habitable space of the camping vehicle (150; 250; 350), at least part of the at least one vehicle wall and at least part of the at least one tent wall each directly delimiting the at least one habitable space,
**characterised in that**
- the partition wall construction is provided with at least one inflation connection (104;204) for inflation means (108, 109) and comprises closure means (105, 106) by means of which all openings (107, 117), such as window openings and/or door openings and/or ventilation openings, which form a component of the partition construction can be closed towards the at least one habitable space;
- the partition wall construction (102, 155) is designed to be inflatable by means of the inflation means, when the closure means are closed, from the stored state into an inflated state which temporarily occurs when the tent construction is being set up and in which state the tent construction is folded out at least in part due to the inflation means producing an overpressure in the habitable space;
- the camping vehicle (150; 250; 350) is designed in this case to move the frame structure (103) at least in part automatically into its operating state during the inflation process by means of the inflation means (108, 109); and
- the frame structure (103) which is moved into its operating state, at least in part, during the inflation process is designed to maintain a set-up state, which is reached once the inflation state has finished, without the overpressure in the habitable space.

2. Camping vehicle according to claim 1, in which the tent construction (201) comprises a fold-out main tent construction and at least one fold-out tent extension (241) for the main tent construction, which is connected or connectable to the main tent construction.

3. Camping vehicle according to either claim 1 or claim 2, further comprising inflation means and/or suction means (108, 109) which can be connected to the inflation connection (104; 204).

4. Camping vehicle according to claim 3, in which the inflation means (108, 109) are adapted to or adjustable in relation to the tent construction such that, in response to an actuation action carried out by a user, in order to set up the tent construction from the stored state the inflation means discharge a metered amount of air which, under standard ambient pressures, is limited to approximately the volume of the inner habitable space when said tent construction is set up.

## Revendications

1. Véhicule de camping, tel un véhicule automobile (350) ou une remorque (1 50 ; 250) pour les loisirs, comprenant :
au moins une paroi de véhicule (1 55) ;
une tente déployable (101 ; 201 ; 301) qui présente au moins une paroi de tente (102) et peut être amenée, lors du montage de la tente, d'un état de stockage fourni au moins par l'au moins une paroi de véhicule, dans lequel la tente est repliée, à un état monté, dans lequel la tente est dépliée ; et
une structure de cadre (103) pour le maintien de l'état monté de la tente déployée ;
dans lequel l'au moins une paroi de véhicule (155) et l'au moins une paroi de tente (102) se raccordent ou peuvent se raccorder l'une à l'autre de telle sorte que celles-ci, dans un état raccordés l'une à l'autre, forment ensemble une partie d'une paroi de délimitation qui définit dans l'état mis en place, au moins un espace de vie intérieur du véhicule de camping (150 ; 250 ; 350), dans lequel non seulement au moins une partie de l'au moins une paroi de véhicule mais également au moins une partie de l'au moins une paroi de tente délimitent chacune directement l'au moins un espace de vie,
**caractérisé en ce que**
la paroi de délimitation est munie d'au moins un raccord de gonflage (104 ; 204) pour des moyens de gonflage (108, 109) et comprend des moyens d'obturation (105, 106) qui permettent de refermer toutes les ouvertures (107, 117) qui font partie de la construction de délimitation, telles les ouvertures de fenêtres et/ou de portes et/ou de ventilation, par rapport à l'au moins un espace de vie ;
la construction de délimitation (102, 155) est conçue de manière à pouvoir être gonflée à partir de l'état de stockage, dans le cas où les moyens de fermeture se trouvent à l'état fermé, dans un état de gonflage transitoire pendant le montage de la tente à l'aide des moyens de gonflage et, dans cet état, la tente est déployée au moins partiellement de telle sorte que les moyens de gonflage exercent une surpression dans l'espace de vie ;
le véhicule de camping (150 ; 250 ; 350) est conçu de manière à amener dans son état de fonctionnement au moins en partie automatiquement la structure de cadre (103) pendant le processus de gonflage à l'aide des moyens de gonflage (108, 109) ; et
la structure de cadre (103) amenée au moins partiellement dans son état de fonctionnement pendant le processus de gonflage est conçue pour maintenir sans aucune surpression dans l'espace de vie un état de montage obtenu après la fin d'un état de gonflage.

2. Véhicule de camping selon la revendication 1, dans lequel la tente (201) présente une tente principale déployable ainsi qu'au moins une tente déployable complémentaire (241) par rapport à la tente principale qui est reliée ou peut être reliée à la tente principale.

3. Véhicule de camping selon la revendication 1 ou 2, comprenant en outre au niveau du raccordement de gonflage (104 ; 204) des moyens de gonflage et/ou des moyens de pressurisation (108, 109) raccordables.

4. Véhicule de camping selon la revendication 3, dans lequel les moyens de gonflage (108, 109) sont ajustés à la tente ou réglables par rapport à celle-ci de telle sorte qu'en réaction à un actionnement réalisé par un utilisateur pour monter la tente à partir de l'état de stockage, les moyens de gonflage fournissent une quantité d'air dosée qui, dans les pressions ambiantes habituelles, est limitée approximativement au volume de l'espace de vie intérieur dans l'état monté.
